# EUROPEAN PATENT APPLICATION

(11) **EP 3 002 869 A2**
(43) Date of publication of application: **06.04.2016**
(21) Application number: 15172941.5
(22) Date of filing: 19.06.2015
(51) Int. Cl.: H02P 7/295

(54) **ELECTRICAL APPARATUS**

(30) Priority: 12.09.2014 JP 2014186696
(71) Applicant: Nidec Corporation, Kyoto-shi, Kyoto 601-8205 (JP)
(72) Inventor: Enomoto, Tetsuo, Kyoto, 601-8205 (JP)
(74) Representative: Stöckeler, Ferdinand

(57) **Abstract**

An electrical apparatus which is compatible with a plurality of different voltages of commercial power supplies is enabled to operate under an optimum condition in accordance with a voltage of the commercial power supply being used.

An electrical apparatus includes a rectifier circuit arranged to rectify a commercial supply voltage; a microcomputer including an input port to which a voltage obtained by subjecting an output voltage of the rectifier circuit to voltage division is inputted, an output port arranged to output an output signal to drive a direct-current load, an A/D conversion portion arranged to convert the voltage inputted to the input port to a digital signal, and a control portion arranged to determine a voltage of a commercial power supply based on an output from the A/D conversion portion, and generate a drive signal for optimum control of the direct-current load in accordance with the voltage; and a driver circuit portion arranged to drive the direct-current load based on the drive signal outputted from the microcomputer.

## Description

### BACKGROUND OF THE INVENTION

### 1. Field of the Invention

The present invention relates to an electrical apparatus which is compatible with a plurality of different voltages of commercial power supplies.

### 2. Description of the Related Art

An electrical apparatus (for example, a product such as a hair drier or the like) which is expected to be used overseas as well is required to include internal circuits, such as a switching circuit and a power supply circuit, to accommodate voltages of commercial power supplies of various countries. As for motors, alternating current motors have been primarily used, but the alternating current motors simply use a mechanical switch, a triac, or the like to directly switch or change a waveform or the voltage of the commercial power supply to exercise control over a basic operation, such as a rotation rate of the motor, the amount of heat generated by a heater, or the like.

In particular, regarding hair driers, a rotation rate of a motor used for a fan and the amount of heat generated by a heater may be switched using a switch in accordance with the voltage of the commercial power supply, which varies between different countries or regions. In this case, it may be difficult to determine whether or not a switching needs to be made, and damage to a part, such as the heater or the like, may occur due to a failure to make a switching. Thus, there have been proposed hair driers which are designed to measure a commercial supply voltage, and automatically switch a motor circuit between a 100 V motor circuit and a 200 V motor circuit, and a heater circuit between a 100 V heater circuit and a 200 V heater circuit, based on the measured commercial supply voltage (see, for example, JP-A 5-015406 and JP-A 64-029206).

### SUMMARY OF THE INVENTION

The inventors recognized that, in the case of an apparatus (e.g., an AC motor) which uses a mechanical switch, a triac, or the like, an adjustment range and an adjustment operation have limitations, and optimization is difficult. Meanwhile, use of a DC motor or the like makes fine control possible, but a voltage after rectification (i.e., a DC voltage) varies because of an AC voltage, which accordingly varies the rotation rate, for example.

In the hair driers described in JP-A 5-015406 and JP-A 64-029206, respectively, after the commercial supply voltage is rectified, the resulting voltage is measured, and the circuit is switched in accordance with the measured voltage. This arrangement not only involves a complicated circuit configuration, but also may not be able to cope with a need for finer switchings among a 100 V range (100 V, 110 V, and 120 V) or a 200 V range (220 V, 230 V, 240 V, and 250 V). For instance, in some countries, different voltages are adopted in different regions, and this may confuse a user.

Further, some types of electrical apparatuses require a switching in specifications, such as an operation mode, functionality, or the like, in accordance with the country or region in which they are used, and this requirement cannot be virtually fulfilled by known techniques.

In view of the above problems, the present invention has been conceived to enable even an electrical apparatus designed for overseas use, which has formerly needed to use a mechanical switch or the like to switch the voltage of the commercial power supply, to be automatically optimized and controlled to operate in accordance with the commercial power supply of any of a variety of countries and regions without a need to make any setting and without complicating the structure of the electrical apparatus.

The present invention provides for an electrical apparatus according to claim 1.

According to a preferred embodiment of the present invention, there is provided an electrical apparatus which is compatible with a plurality of different voltages of commercial power supplies, and which includes a direct-current load driven by a direct-current voltage. The electrical apparatus includes a rectifier circuit, a voltage divider circuit, a microcomputer, and a driver circuit portion. The rectifier circuit is arranged to rectify a power supply voltage. The voltage divider circuit is arranged to subject an output voltage of the rectifier circuit to voltage division. The microcomputer includes an input port, an output port, an A/D conversion portion, and a control portion. An output voltage of the voltage divider circuit is inputted to the input port. The output port is arranged to output an output signal to drive the direct-current load. The A/D conversion portion is arranged to convert the voltage inputted to the input port to a digital signal. The control portion is arranged to determine a voltage of the commercial power supply based on the digital signal outputted from the A/D conversion portion, and generate a drive signal for optimum control of the direct-current load in accordance with the voltage. The driver circuit portion is arranged to drive the direct-current load based on the drive signal outputted from the output port of the microcomputer.

When a commercial supply voltage is rectified and converted to a direct-current voltage, and the direct-current load is used, fine control and addition of new functions are made possible by the microcomputer, providing the product with added value. However, although the fine control is made possible, the voltage after the rectification varies because of the commercial supply voltage, which accordingly varies an operating condition of the direct-current load.

Thus, according to the electrical apparatus having the above-described structure, the A/D conversion portion and the control portion in the microcomputer are used to measure the voltage of the commercial power supply and carry out optimum driving of the direct-current load in accordance with the measured voltage. Thus, optimum control of a variety of operations is made possible by determining which of a variety of commercial power supplies of various countries and regions is being used, without a need for a user to change the setting on a mechanical switch in accordance with the voltage.

In the above-described electrical apparatus, it is preferable that a plurality of different voltage values of the commercial power supplies be previously set in the control portion, and that manners of controlling the direct-current load be selected in accordance with the respective voltage values to generate the drive signal. In this case, 10 V ranges or narrower voltage ranges may be previously set in the control portion, and the control portion may be arranged to determine which of the ranges the voltage of the commercial power supply falls within. In addition, control modes and functionality in accordance with a plurality of regions having different voltages of the commercial power supplies may be set in the control portion, and the direct-current load may be controlled to operate in a different manner depending on a region in which the electrical apparatus is being used.

Further, it is preferable that the direct-current load be a motor used to drive a fan in a hair drier, and that a rotation rate of the motor be controlled in accordance with the power supply voltage. It is particularly preferable that the electrical apparatus further include a heater driven by the voltage of the commercial power supply, and that the control portion be arranged to control an amount of heat generated by the heater at the same time.

In the electrical apparatus having the above-described structure, the A/D conversion portion and the control portion in the microcomputer are used to measure the voltage of the commercial power supply to detect the voltage or a difference in the voltage, and thus, any of the commercial power supplies of a variety of regions can be recognized to drive the direct-current load in accordance with the recognized commercial power supply and realize optimization or control of a variety of operations, without a need for a user to change a setting on a mechanical switch.

The above and other elements, features, steps, characteristics and advantages of the present invention will become more apparent from the following detailed description of the preferred embodiments with reference to the attached drawings.

### BRIEF DESCRIPTION OF THE DRAWINGS

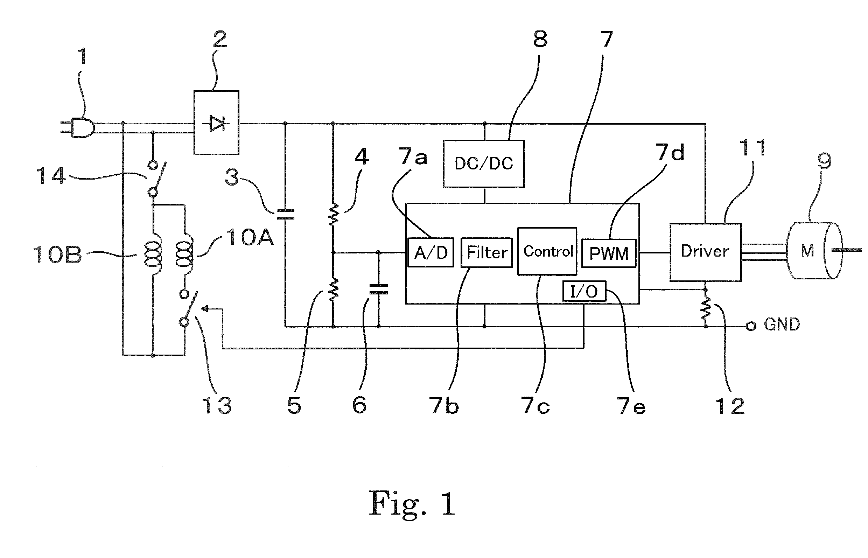

FIG. 1 is a circuit diagram of a hair drier, which is an electrical apparatus according to a preferred embodiment of the present invention.

### DETAILED DESCRIPTION OF THE PREFERRED EMBODIMENTS

An electrical apparatus according to a preferred embodiment of the present invention will be described below with reference to FIG. 1. The electrical apparatus according to this preferred embodiment is a hair drier. The hair drier according to the present preferred embodiment is an electrical apparatus which is compatible with a plurality of different voltages of commercial power supplies, and which includes a direct-current load driven by a direct-current voltage. FIG. 1 illustrates a circuit configuration of the hair drier.

A rectifier circuit 2 formed by a diode bridge circuit is connected to a power input portion (an AC outlet) 1 to which a commercial supply voltage (an AC voltage) is supplied, and the AC voltage supplied from the power input portion 1 is subjected to full-wave rectification. In other words, the rectifier circuit 2 rectifies a power supply voltage. A rectified output from the rectifier circuit 2 is smoothed by a smoothing capacitor 3, and is inputted to a voltage divider circuit formed by two resistors 4 and 5. In addition, a voltage across the resistor 5 is, as a measured voltage, inputted to a microcomputer 7 through an input port through a capacitor 6 used for an analog filter. In other words, the voltage divider circuit subjects an output voltage of the rectifier circuit to voltage division, and an output voltage of the voltage divider circuit is inputted to the input port.

The microcomputer 7 includes the input port and an output port. A direct-current voltage obtained by rectification at the rectifier circuit 2 and smoothing at the capacitor 3 is converted to a desired direct-current voltage at a DC to DC converter 8, and the resultant direct-current voltage is supplied to the microcomputer 7. The microcomputer 7 functions to enable a motor 9 used for a fan and two heaters 10A and 10B, i.e., heating elements, to be driven under optimum conditions. The motor 9 is the direct-current load of the hair drier. In other words, the output port of the microcomputer 7 outputs an output signal to drive the direct-current load.

More specifically, the microcomputer 7 includes an A/D conversion portion 7a, a noise removal filter 7b, a control portion 7c, a PWM output portion 7d, and an I/O portion 7e. The A/D conversion portion 7a is arranged to convert the measured voltage supplied from the resistor 5 and the capacitor 6 through the input port to a digital signal (i.e., convert the voltage inputted to the input port to a digital signal). The noise removal filter 7b is arranged to remove noise from the digital signal supplied from the A/D conversion portion 7a. The control portion 7c is arranged to determine a voltage value of a commercial power supply based on the measured voltage supplied from the filter 7b, and output drive signals for the motor 9 and the heaters 10A and 10B based on various conditions for optimum control as previously set in accordance with the voltage value (i.e., determine a voltage of the commercial power supply based on the digital signal outputted from the A/D conversion portion, and generate a drive signal for optimum control of the direct-current load in accordance with the voltage). The PWM output portion 7d is arranged to generate a PWM signal for driving the motor 9 based on a motor drive signal supplied from the control portion 7c, and output the generated PWM signal through a first output port. The I/O portion 7e is arranged to output a relay signal used for heater energization control through a second output port based on a heater drive signal supplied from the control portion 7c.

The direct-current voltage obtained by the rectification at the rectifier circuit 2 and the smoothing at the capacitor 3 is inputted to a driver circuit 11, which functions as a driver circuit portion to drive the motor 9, through a resistor 12 to drive the motor 9 in accordance with the PWM signal supplied from the PWM output portion 7d of the microcomputer 7. In other words, the driver circuit portion is arranged to drive the direct-current load based on a drive signal outputted from the output port of the microcomputer 7.

AC power is supplied from the power input portion 1 to each of the two heaters 10A and 10B. Specifically, a relay switch 13 is connected in series to the heater 10A, and the other heater 10B is connected in parallel to this series circuit. A circuit composed of the heaters 10A and 10B and the relay switch 13 is connected to the power input portion 1 through a cool/hot air switch 14. Here, the relay switch 13 is turned on or off based on the relay signal outputted from the I/O portion 7e of the microcomputer 7. More specifically, if the control portion 7c of the microcomputer 7 determines that the commercial supply voltage falls within a 100 V range, the relay switch 13 is turned on, whereas if the control portion 7c of the microcomputer 7 determines that the commercial supply voltage falls within a 200 V range, the relay switch 13 is turned off. Meanwhile, the cool/hot air switch 14 is used to switch air blown by the hair drier between hot air and cool air, and when the cool/hot air switch 14 is on, a hot air mode is selected, while when the cool/hot air switch 14 is off, a cool air mode is selected.

Once the power input portion 1 of the hair drier having the above-described structure is connected to the commercial power supply, the commercial supply voltage is subjected to the full-wave rectification at the rectifier circuit 2 and to the smoothing at the capacitor 3. The resulting DC voltage is converted by the DC to DC converter 8 to a predetermined voltage, and is supplied to the microcomputer 7. The above DC voltage is subjected to the voltage division at the voltage divider circuit (i.e., the resistors 4 and 5), and is, as the measured voltage, inputted to the A/D conversion portion 7a of the microcomputer 7. The voltage value of the commercial power supply is determined by the control portion 7c based on this measured voltage.

The control portion 7c includes a control program used to exercise optimum control over the motor 9 in accordance with the voltage value of the commercial power supply, and a program used to make a switch related to the heaters 10A and 10B in accordance with whether the voltage value of the commercial power supply falls within the 100 V range or the 200 V range. Based on a determination result obtained by the control portion 7c as to the voltage value of the commercial power supply, a drive signal for controlling the motor 9 to rotate at an optimum rotation rate is outputted as the PWM signal from the PWM output portion 7d, and the motor 9 is caused by the driver circuit 11 to run at the optimum rotation rate. At the same time, when the voltage value of the commercial power supply falls within the 100 V range, the control portion 7c outputs a relay signal to turn on the relay switch 13 through the I/O portion 7e, and both the heaters 10A and 10B are simultaneously driven by the commercial power supply. Meanwhile, when the voltage value of the commercial power supply falls within the 200 V range, the control portion 7c outputs a relay signal to turn off the relay switch 13, and only the heater 10B is driven by the commercial power supply.

Thus, the motor 9 is enabled to run at the optimum rotation rate in accordance with the commercial supply voltage. In addition, an automatic switch in the amount of heat generated by the heaters 10A and 10B in accordance with the commercial supply voltage is also made possible, allowing use of the hair drier without troubling a user.

Here, the control portion 7c may be arranged to determine the voltage value of the commercial power supply more precisely. For example, 10 V ranges or still narrower voltage ranges may be previously set in the control portion 7c, and the control portion 7c may be arranged to determine which of such narrower voltage ranges the voltage value of the commercial power supply falls within. This will make it possible to optimize the motor rotation rate, the amount of heat generated by the heaters, and other operations in accordance with the voltage value of the commercial power supply, which varies between different countries or regions even among a 100 V zone (e.g., Japan 100 V, Canada 110 V, and the United States 120 V) or a 200 V zone (e.g., Europe 220 V, Germany 230 V, the United Kingdom 230 V/240 V, and Australia 240 V/250 V).

While a preferred embodiment of the present invention has been described above, it will be understood that the present invention is not limited to the above-described preferred embodiment, and that a variety of modifications are possible without departing from the scope of the present invention as claimed below.

For example, the above-described hair drier uses the two heaters 10A and 10B, and one or both of the heaters 10A and 10B are driven to adjust the amount of heat generated. However, finer control of the amount of heat generated in accordance with the power supply voltage is made possible by, for example, appropriately modifying the circuit configuration.

According to a preferred embodiment of the present invention, the voltage value of the commercial power supply provided is determined, and a switch in various control is made accordingly. Therefore, a preferred embodiment of the present invention is usable not only when an electrical apparatus according to the preferred embodiment is carried to another country or region where the voltage value of the commercial power supply is different and is used in that country or region, but also when electrical apparatuses according to the preferred embodiment are supplied to a plurality of countries or regions where different voltage values of the commercial power supplies are adopted. In this case, a place in which the electrical apparatus is being used can be determined based on the voltage value of the commercial power supply, and based on this determination, functionality and a mode of control by the microcomputer 7 may be automatically switched to adjust specifications of the electrical apparatus in accordance with the place in which the electrical apparatus is being used. For example, in the case where electrical apparatuses according to a preferred embodiment of the present invention are supplied to Japan and the United States, and different functionality is demanded in Japan and the United States, the preferred embodiment of the present invention enables the functionality of the electrical apparatuses to be automatically switched. This eliminates a need to exercise management of microcomputers, circuit boards, and so on in accordance with destinations of the electrical apparatuses.

Further, a preferred embodiment of the present invention is also applicable to an electrical apparatus which is desired to operate in different operation modes depending on use environment. For example, in the case of a ceiling fan, a mode which causes blades to rotate in one fixed direction to send air downward with respect to the blades is selected in a region where cool air is always wanted, such as a region where the temperature is high throughout the year, whereas in a region which has summer and winter, a mode which causes the blades to rotate in one fixed direction to provide cool air is selected in summer, while a mode which causes the blades to rotate in an opposite direction to promote circulation of air in an entire room is selected in winter to prevent a user from feeling cold because of direct wind. When a preferred embodiment of the present invention is applied to such a ceiling fan, a place in which the ceiling fan according to a preferred embodiment of the present invention is being used is determined based on the voltage value of the commercial power supply, and based on this determination, functionality and a mode of the microcomputer can be automatically switched to automatically adjust specifications of the ceiling fan in accordance with the place in which the ceiling fan is being used.

Preferred embodiments of the present invention are applicable to any electrical apparatuses which are compatible with a plurality of commercial power supplies having different voltage values, and which are desired to change and optimize their operation and control in accordance with differences in the power supply voltage.

Features of the above-described preferred embodiments and the modifications thereof may be combined appropriately as long as no conflict arises.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An electrical apparatus which is compatible with a plurality of different voltages of commercial power supplies, and which includes a direct-current load (9) driven by a direct-current voltage, the electrical apparatus comprising:
a rectifier circuit (2) arranged to rectify a power supply voltage;
a voltage divider circuit (4,5) arranged to subject an output voltage of the rectifier circuit (2) to voltage division;
a microcomputer (7) including an input port to which an output voltage of the voltage divider circuit (4,5) is inputted, an output port arranged to output an output signal to drive the direct-current load (9), an A/D conversion portion (7a) arranged to convert the voltage inputted to the input port to a digital signal, and a control portion (7c) arranged to determine a voltage of the commercial power supply based on the digital signal outputted from the A/D conversion portion (7a), and generate a drive signal for control of the direct-current load (9) in accordance with the voltage; and
a driver circuit portion (11) arranged to drive the direct-current load (9) based on the drive signal outputted from the output port of the microcomputer (7).

2. The electrical apparatus according to claim 1, wherein a plurality of different voltage values of the commercial power supplies are previously set in the control portion (7c), and manners of controlling the direct-current load (9) are selected in accordance with the respective voltage values to generate the drive signal.

3. The electrical apparatus according to one of claims 1 and 2, wherein 10 V ranges or narrower voltage ranges are previously set in the control portion (7c), and the control portion (7c) is arranged to determine which of the ranges the voltage of the commercial power supply falls within.

4. The electrical apparatus according to any one of claims 1 to 3, wherein control modes and functionality in accordance with a plurality of regions having different voltages of the commercial power supplies are set in the control portion (7c), and the direct-current load (9) is controlled to operate in a different manner depending on a region in which the electrical apparatus is being used.

5. The electrical apparatus according to any one of claims 1 to 4, wherein the direct-current load (9) is a motor used to drive a fan in a hair drier, and a rotation rate of the motor is controlled in accordance with the power supply voltage.

6. The electrical apparatus according to any one of claims 1 to 5, further comprising a heater (10A, 10B) driven by the voltage of the commercial power supply, wherein the control portion (7c) is arranged to control an amount of heat generated by the heater (10A, 10B).
